Europäisches Patentamt

European Patent Office

Office européen des brevets

(11) Publication number: **0 401 520**

**A2**

(12) **EUROPEAN PATENT APPLICATION**

(21) Application number: **90108567.0**

(22) Date of filing: **07.05.90**

(51) Int. Cl.5 **B23B 47/34, B23Q 11/08**

(30) Priority: **08.06.89 GB 8913239**

(43) Date of publication of application:
**12.12.90 Bulletin 90/50**

(84) Designated Contracting States:
**AT BE CH DE DK ES FR GR IT LI LU NL SE**

(71) Applicant: **BUSTER PRODUCTS LIMITED**
**9, Badgers Meadow, Pwllmeyric**
**Chepstow, Gwent NP6 6UE(GB)**

(72) Inventor: **Cox, Michael George James**
**17 Farwell Road**
**Sidcup, Kent DA14 4LQ(GB)**

(74) Representative: **Frankland, Nigel Howard et al**
**FORRESTER & BOEHMERT**
**Widenmayerstrasse 4/I**
**D-8000 München 22(DE)**

(54) **A dust collector.**

(57) A dust collector for collecting dust created when drilling a hole in a wall consists of a hollow housing with two opposed aligned apertures. The housing is provided with an adhesive coated ring surrounding one aperture so that the housing can be adhered to a wall. The drill bit is then passed through the two apertures to drill the hole in the wall. The dust generated is collected inside the housing.

# Fig.1.

The present invention relates to a dust collector, and more particularly relates to a dust collector intended for use when a hole is to be drilled in a wall.

When a hole is drilled in a wall using, for example, an electric drill, the drill bit, whilst forming the hole in the wall, creates significant quantities of fine dust, from the material forming the wall. This dust is removed from the hole formed in the wall by the drill by means of the helical flutes provided in the drill. This dust may be injected into the room in which the drilling operation is being performed by a considerable distance, but it is usually found that after such a drilling operation, there is a pile of dust on the skirting board or on the carpet at the foot of the wall where the drilling operation has been performed.

This is very inconvenient since, at the end of each drilling operation it is necessary to remove the dust, using a vacuum cleaner or similar appliance. If there is an item of furniture adjacent the wall where the drilling operation has been performed, then the item of furniture must be removed.

The present invention seeks to provide a device which can be utilised to collect dust generated during a drilling operation.

According to this invention there is provided a device for collecting dust when a hole is drilled in a wall or the like, said device comprising a housing defining a substantially hollow interior, the housing having means defining two substantially aligned substantially opposed apertures, the housing being provided, on the exterior thereof, adjacent one of said aperture defining means, with means to secure the housing to a wall.

In use, the device can be secured to a wall, and the drill bit may be passed through the aligned apertures to make the hole in the wall. The dust generated by the drilling operation will be collected within the housing.

Preferably the means to secure the housing to the wall comprise adhesive means adapted to establish a seal between the wall and the said aperture defining means.

Conveniently the adhesive means comprise an annular element presenting two opposed adhesive faces, one adhesive face being secured to the housing, and the other being exposed to enable the housing to be mounted on a wall.

Advantageously the annular element is formed of a resilient or foamed plastics material.

Preferably the adhesive on the exposed face of the annular element is re-usable.

Conveniently the means defining at least one of said apertures comprises a line of mechanical weakness defining a circular disc which can be readily separated from the rest of the housing, thus creating the said aperture.

Preferably at least one of said means defining an aperture are initially covered by an adhesive patch, label or the like.

Preferably the housing is at least partially fabricated of a transparent material.

Advantageously the housing is fabricated substantially wholly of a transparent material.

Conveniently the housing is formed from a backing sheet to which a cover is releasably connected, the cover and the backing sheet together defining a said housing.

Preferably the backing sheet is provided with a slot therein to enable the backing sheet to be suspended from a support.

Conveniently the slot is a "Euro slot".

Advantageously the cover is releasably connected to the backing sheet by means of a snap action.

Alternatively the cover is releasably secured to the backing sheet by means of a screw action.

Alternatively the cover is releasably connected to the backing sheet by means of a slide action.

The device may comprise a package containing goods or items to be sold.

The invention also relates to a method of collecting dust when drilling a hole in a wall comprising the steps of taking a device as described above, securing the device to a wall with the said apertures in alignment with a hole to be drilled in the wall, passing a drill bit through the aligned apertures to contact the wall and operating a drill secured to the drill bit to cause the drill to drill the hole, and catching the dust within the housing.

In order that the invention may be more readily understood, and so that further features thereof may be appreciated, the invention will now be described, by way of example, with reference to the accompanying drawings in which;

FIGURE 1 is a perspective view of a device in accordance with the invention;

FIGURE 2 is a diagrammatic cross-sectional view illustrating the device of Figure 1 when in use;

FIGURE 3 is an exploded view of an alternative embodiment of the invention which may be utilised, additionally, as a package in which goods may be sold at a point-of-sale; and

FIGURE 4 is an exploded diagrammatic cross-sectional view of the device of Figure 3.

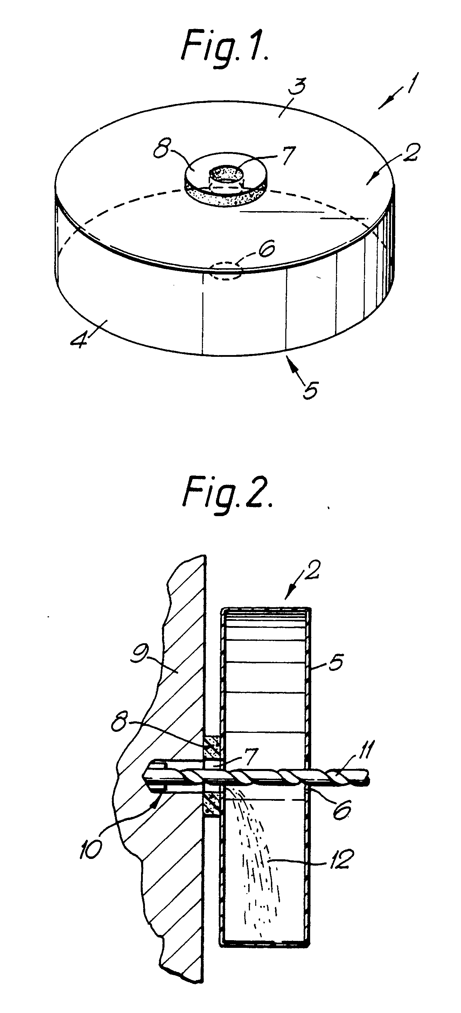

Referring initially to Figure 1 of the drawings, a dust collecting device 1, in accordance with the invention is in the form of a hollow housing 2, having a circular rear wall 3, an annular side wall 4 and a circular front wall 5 which is in spaced parallelism with the rear wall 3. It will be appreciated that the walls of the housing define a hollow interior of the housing having the configuration of a regular disc. The housing may be formed of any appropriate material. However, it may be preferred for the housing to be of a transparent material, and thus an appropriate plastics material may be utilised.

An aperture 6 is provided in the centre of the front wall 5 of the housing, and another aperture 7 is provided in the centre of the rear wall 3 of the housing. The apertures 6 and 7 are thus co-aligned, but are formed in opposed faces of the housing. The aperture 7 is surrounded by a ring 8 which may preferably be formed of a resilient material, such as a resilient plastics foam, but which, in any event, presents two opposed adhesive faces. Thus the ring 8 is secured to the rear face 3 of the housing 2, by one of its adhesive faces. The ring 8 presents, on its other or outer surface an adhesive which may initially be covered by a covering sheet, which may be a siliconised paper sheet.

When the device 1 illustrated in Figure 1 is to be utilised the covering sheet is peeled off or otherwise removed from the adhesive on the outer face of the ring 8, and the ring 8 is then utilised to secure the housing 2 to a wall 9 in which a hole is to be drilled. The housing is located so that the aperture 7 is aligned with the desired position for the hole 10 to be drilled in the wall. A drill bit 11, connected to a drill is then inserted through the aperture 6 and through the aperture 7 and is brought into contact with the wall 9. The drill is then operated, causing the hole 10 to be formed. Dust, generated during the drilling of the hole is transferred by the flutes formed' in the periphery of the drill 11 into the housing 2 where the dust particles 12 fall to the bottom of the housing. The ring 8, when adhered to the wall, effectively forms a dust-proof seal between the wall and the interior of the housing 2.

It will be appreciated that the housing 2 may be of any desired shape. It is most desirable that the adhesive ring 8 forms a substantial seal between the wall and the interior of the housing so that no dust can escape while passing from the hole 10 to the interior of the housing 2. The adhesive on the outer face of the ring 8 is of the re-usable type, so that after a hole has been drilled the described device can easily be removed from the wall, without damaging the wall, and may then be re-used.

It will be appreciated that the device as described with reference to Figures 1 and 2 may be manufactured as an item for use in the described manner. However, a device in accordance with the invention may be fabricated as a package, containing items to be sold. Thus the item in accordance with the invention may be effectively constituted by the packaging, for another product, with the cost of the package being not significantly greater than the cost of a conventional package. This may help encourage potential customers to buy a product packaged within an embodiment of the invention, rather than being packaged in a conventional package.

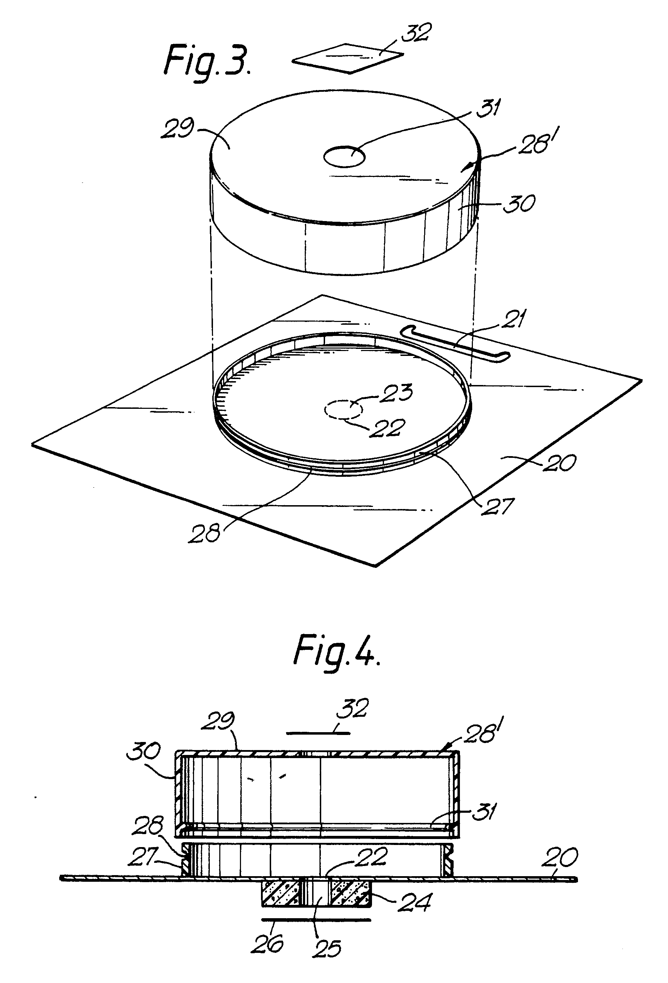

Figures 3 and 4 illustrate a package that constitutes such an embodiment of the invention.

The package of Figures 3 and 4 consists of a backing sheet 20, which is of rectangular form and which is provided adjacent one edge with a slot 21, (which may be termed a "Euro-slot") which may be utilised to suspend the package at a point-of-sale. The backing sheet may be formed of cardboard or the like or may preferably be formed of a transparent material. In the central region of the backing sheet 20 there is line of mechanical weakness 22 of circular form defining a small disc 23 which can easily be pushed-out of the backing sheet 20 to create an aperture. On the rear face of the backing sheet 20, as can be seen in Figure 4, is an annular or ring-shaped element 24, preferably formed of a foam material, having adhesive provided on both opposed faces thereof. The ring-shaped element 24 is adhered to the backing sheet 20, so that the central aperture 25 defined thereby is aligned with the perforated line 22. The exposed adhesive face of the ring 24 may be covered with a peel-off cover 26, such as a sheet of siliconised paper.

Formed on the front face of the backing sheet 20 is a circular upstanding lip 27 which is concentric with the perforated line 22. The lip 27 is provided with a circumferential recess 28 therein of annular form.

A cover 28 is provided, which may be formed of a transparent plastics material comprising an upper wall 29 of circular form and a depending annular side wall 30. The annular side wall 30 may carry, towards its lower end, an annular projection 31 adapted to be received within the annular groove 28. It will thus be appreciated that the cover may be snap-fastened to the lip 27. In an alternative embodiment of the invention the lip 27 and the cover 31 may carry cooperating screwthreads to enable the cover to be screwed to the lip 27 provided on the backing sheet 20.

In another embodiment the cover may slideably engage the backing sheet, for example with outwardly directed flanges on the cover being slideably received within opposed channels defined on the backing sheet.

An aperture 31 is provided which is located in the centre of the circular wall 29 of the cover 28. The aperture may be covered, if desired, with a small patch =32 of adhesive tape, which may comprise a label.

It will be appreciated that products to be sold may be located within the cover 28 which may then be secured to the backing sheet. If the cover 28 is formed of a transparent material, the products will be readily visible. The backing sheet may be suspended by means of the slot 21, so that the package can be displayed in an attractive way. If the items located within the cover 28 are small, the adhesive patch 32 may be located over the aperture 31 in order to prevent the items falling out of the package through the aperture.

A person buying the package will remove the cover 28 from the backing sheet, thus obtaining access to the goods packed within the package. The person may then utilise a pencil or similar implement to press out the central disc 23 defined by the perforated line 22, to form an aperture in the backing sheet 20. The cover 28 may then be again mounted in position on the backing sheet 20, and the peel-off covering 26 on the adhesive coated surface of the ring 24 may be peeled off. The device may thus be utilised in precisely the same way as the device illustrated in Figures 1 and 2. However, when the housing becomes filled with dust, the cover can be removed from the backing sheet, and the dust can be disposed of in a convenient way.

It will be appreciated that the device, as described, may be utilised to package any items that are to be sold, but it is thought most likely that the package may be found to be attractive if the package contains screws, or wall-plugs, or a combination of such products.

Whilst the invention has been described with reference to an embodiment in which the principal housing is of circular form, in alternative embodiments of the invention the main housing may be of substantially triangular form or of a "tear drop" or "pear" shape. It is then envisaged that the aligned holes through the principal housing may be formed towards a or the apex of the housing. This will enable the housing to be utilised, in the manner described, even if a hole has to be drilled very close to a corner or ceiling, which might not otherwise be possible.

## Claims

1. A device for collecting dust when a hole is drilled in a wall or the like, said device comprising a housing defining a substantially hollow interior, wherein the housing has means defining two substantially aligned substantially opposed apertures, the housing being provided, on the exterior thereof, adjacent one of said aperture defining means, with means to secure the housing to a wall.

2. A device according to Claim 1 wherein the means to secure the housing to the wall comprise adhesive means adapted to establish a seal between the wall and the said aperture defining means.

3. A device according to Claim 2 wherein the adhesive means comprise an annular element presenting two opposed adhesive faces, one adhesive face being secured to the housing, and the other being exposed to enable the housing to be mounted on a wall.

4. A device according to any one of the preceding Claims wherein the means defining at least one of said apertures comprises a line of mechanical weakness defining a circular disc which can be readily separated from the rest of the housing, thus creating the said aperture.

5. A device according to any one of the preceding Claims wherein at least one of said means defining an aperture are initially covered by an adhesive patch, label or the like.

6. A device according to any one of the preceding Claims wherein the housing is at least partially fabri cated of a transparent material.

7. A device according to any one of the preceding Claims wherein the housing is formed from a backing sheet to which a cover is releasably connected, the cover and the backing sheet together defining a said housing.

8. A device according to Claim 7 wherein the backing sheet is provided with a slot therein to enable the backing sheet to be suspended from a support.

9. A device according to any one of the preceding Claims comprising a package containing goods or items to be sold.

10. A method of collecting dust when drilling a hole in a wall comprising the steps of taking a device according to any one of Claims 1 to 9, securing the device to a wall with the said apertures in alignment with a hole to be drilled in the wall, passing a drill bit through the aligned apertures to contact the wall and operating a drill secured to the drill bit to cause the drill to drill the hole, and catching the dust within the housing.

Fig.1.

Fig.2.

Fig.3.

Fig.4.